# EUROPÄISCHE PATENTSCHRIFT

(11) **EP 3 892 496 B1**
(45) Veröffentlichungstag und Bekanntmachung des Hinweises auf die Patenterteilung: **07.06.2023**
(21) Anmeldenummer: 21163376.3
(22) Anmeldetag: 18.03.2021
(51) Int. Cl.: B60P 3/32, E04H 1/12, E04B 1/348, E04B 1/344, E04H 1/04

(54) **GEBÄUDESYSTEM MIT EINER TRANSPORTABLEN WOHNEINHEIT UND EINEM LAGERGEBÄUDE SOWIE VERFAHREN ZUM TRANSPORT UND ZUM EINBRINGEN EINER SOLCHEN WOHNEINHEIT IN EIN LAGERGEBÄUDE**
BUILDING SYSTEM WITH A TRANSPORTABLE LIVING UNIT AND A STORAGE BUILDING AND METHOD FOR TRANSPORTING AND INSERTING SUCH A LIVING UNIT INTO A STORAGE BUILDING
SYSTÈME DE BÂTIMENT DOTÉ D'UNE UNITÉ DE LOGEMENT TRANSPORTABLE ET D'UN BÂTIMENT DE STOCKAGE, AINSI QUE PROCÉDÉ DE TRANSPORT ET DE DÉPLACEMENT D'UNE TELLE UNITÉ DE LOGEMENT DANS UN BÂTIMENT DE STOCKAGE

(30) Priorität: 11.04.2020 DE 102020002241
(43) Veröffentlichungstag der Anmeldung: 13.10.2021
(73) Patentinhaber: Gross und Co. Raumsystem GmbH, 32683 Barntrup (DE)
(72) Erfinder: Gross, Steffen, 67374 Hanhofen (DE)
(74) Vertreter: Kesselhut, Wolf

(56) Entgegenhaltungen:
- WO-A1-2004/097130
- WO-A1-2011/053397
- DE-A1- 1 434 592
- FR-A1- 2 950 912
- US-A1- 2016 312 485

## Beschreibung

Die Erfindung betrifft ein mobiles Gebäudesystem mit einer transportablen Wohneinheit und einem Lagergebäude sowie ein Verfahren zum Transport und zum Einbringen einer solchen Wohneinheit in ein solches Lagergebäude gemäß dem Oberbegriff von Anspruch 1 und 14.

Der Gedanke, Wohngebäude mobil auszugestalten und diese beispielsweise von einem Ort zu einem nächsten zu transportieren um diese dort für eine längere Zeit stationär zu nutzen, besteht bereits seit langem und wird beispielsweise in Form von Wohnwagen oder Wohnmobilen verwirklicht.

Die WO 2011/053397 A1 beschreibt ein Gebäudesystem, welches eine zentrale Wohneinheit mit einem massiven eigensteifen selbsttragenden Rahmen umfasst, aus der Erweiterungsmodule, welche auf massiven Querträgern angeordnet sind, zur Vergrößerung des gesamt nutzbaren Raumes zu beiden Seiten hin ausziehbar sind. Obgleich das Dokument vorschlägt, diese selbsttragenden Wohneinheiten in einem Lagergebäude aufzunehmen, gibt das Dokument keinen Hinweis darauf, den Bodenrahmen der zentralen Einheiten mit Huböffnungen zu versehen, mittels welcher diese quer in die Lagerplätze des Lagergebäudes mit Hilfe eines Gabelstaplers eingesetzt werden können. Ebenso fehlt dem Dokument der Hinweis auf einen konkreten Wandaufbau.

Die FR 2 950 912 A1 beschreibt ein Gebäudesystem mit einem Lagergebäude, in welches würfelförmige Wohneinheiten mit Hilfe eines Gabelstaplers in entsprechende Aufnahmeplätze einsetzbar sind. Das Dokument gibt keinen Hinweis auf eine Wohneinheit mit einem Bodenrahmen aus Rahmenprofilen, in deren Längsseiten zwei Huböffnungen geformt sind, in welche die Hubzinken eines Gabelstaplers einführbar sind, um die Wohneinheiten mit einer Längsseite voraus quer in die Lagerplätze einzuschieben. Ebenso gibt das Dokument keinen Hinweis auf den konkreten Wandaufbau der Wohneinheiten.

Die WO 2004/097130 A1 beschreibt ein transportables Gebäude, welches nach Art eines Containers ausgestaltet ist und einen selbsttragenden massiven Rahmen besitzt. Aufgrund des damit einhergehenden hohen Gewichts sind die Wohneinheiten ausschließlich auf LKW-Anhängern transportierbar, von denen sie lediglich mit Hilfe von Schwerlaststaplem abgehoben werden können. Aufgrund des hohen Gewichts und ihrer Länge eignen sich die Einheiten nicht zum Transport auf PKW-Anhängern.

Die US 2016/312485 A1 beschreibt ein Gebäudesystem mit nicht selbsttragenden Wohneinheiten, die in Lagerplätzen eines zugehörigen Lagergebäudes übereinander eingesetzt werden können. Das Dokument gibt keinen Hinweis auf den Einsatz eines länglichen Bodenrahmens mit Rahmenprofilen, in denen Huböffnungen zur Aufnahme der Hubzinken eines Gabelstaplers geformt sind. Ebenso ist dem Dokument keine Information über den konkreten Aufbau der Wände der Wohneinheiten sowie darauf zu entnehmen, die Wohneinheiten mit ihren Längsseiten voraus quer in die Aufnahmeplätze des Lagergebäudes einzusetzen.

Aus der WO 2019/05815 381 ist ein mobiles Unterkunftssystem bekannt, welches eine voll ausgestattete Wohneinheit umfasst, die zum Transport in einen Container eingeschoben wird, der mittels eines entsprechenden Lkw zu einem gewünschten Ort transportiert werden kann, um die Wohneinheit dort auszuladen und stationär zu positionieren. Durch den Transport in einem standardisierten Container ist das System unflexibel und erfordert für den Transport stets einen entsprechend ausgerüsteten Lkw, der nach dem Abstellen der Wohneinheit in der Regel wieder zum Ausgangsort zurückgefahren werden muss.

Aus der DE 1 434 592 A1 ist ein transportables kistenförmiges Haus mit an seinen Längsseiten ausschwenkbar befestigten Tragarmen bekannt, die gegen den Erdboden gerichtete Stützspindeln aufweisen. Das Dokument enthält keinen Hinweis darauf, den Boden des Hauses aus Rahmenprofilen mit darin geformten Aufnahmeöffnungen zu bilden, über die das Haus mithilfe eines Gabelstaplers durch dessen Hubzinken ergriffen und auf ein geeignetes Transportfahrzeug verladen werden kann. Ebenso wenig ist dem Dokument ein Hinweis auf ein Gebäudesystem entnehmbar, in welchem mehrere solcher kistenförmigen Häuser für einen längeren Zeitraum besonders raumsparend übereinander aufgenommen werden können.

Weiterhin beschreibt die DE 20 2008 006 4961 ein Mehrzweck-Containergebäude, bei welchem sich die selbstragend ausgeführten tortenstückförmigen Container-Wohneinheiten, welche mittels eines Tiefladers von einem Ort zu einem nächsten transportiert werden, kreisförmig und übereinander zu einem kompakten Wohngebäude-Turm stapeln lassen. Das Dokument gibt keinen Hinweis, die Container-Wohneinheiten nicht-selbsttragend auszuführen und mit einem Bodenrahmen aus Rahmenprofilen zu versehen, in denen seitliche Aufnahmeöffnungen für die Hubzinken eines Gabelstaplers geformt sind, mittels welchem die Container-Wohneinheiten auf ein Transportfahrzeug verladen werden können. Zudem gibt das Dokument keinen Hinweis darauf, die Container-Wohneinheiten in einem Lagergebäude mit entsprechenden übereinander angeordneten Lagerplätzen zu stapeln, in die die Wohneinheiten mittels eines erwähnten Gabelstaplers durch eine Öffnung hindurch auf entsprechenden Lagerplätzen abgesetzt werden können. Zudem besitzen die Container-Wohneinheiten aufgrund der selbsttragenden Rahmenkonstruktion, die die Grundvoraussetzung für das Übereinanderstapeln der Einheiten ist, ein hohes Gewicht, sodass diese durch einen Schwerlastkran in die entsprechenden Positionen gehoben werden müssen. Aufgrund des hohen Gewichts einer jeden solchen Container-Wohneinheit ist zudem der Transport derselben auf einem herkömmlichen Pkw Anhänger nicht möglich.

Demgemäß ist es eine Aufgabe der vorliegenden Erfindung, ein Gebäudesystem mit einer Wohneinheit zu schaffen, die einen hohen Wohnkomfort bietet und mit geringem Aufwand mittels eines herkömmlichen PKW-Anhängers von einem Ort zu eine anderen transportierbar ist, und die optional in mehreren Ebenen übereinander angeordnet werden kann.

Diese Aufgabe wird erfindungsgemäß durch ein Gebäudesystem mit den Merkmalen von Anspruch 1 gelöst.

Eine weitere Aufgabe der vorliegenden Erfindung ist es, ein Verfahren zu schaffen, mit welchem sich die Wohneinheit eines solchen Gebäudesystems transportieren und in ein Lagergebäude des Gebäudesystems einsetzen lässt.

Diese Aufgabe wird erfindungsgemäß durch ein Verfahren mit den Merkmalen von Anspruch 14 gelöst.

Weitere Merkmale der Erfindung sind in den Unteransprüchen beschrieben.

Die Erfindung besitzt den Vorteil, dass die Wohneinheit als Gebäude mit einem hohen Wohnkomfort nach Art eines sogenannten Tiny-Hauses ausgeführt werden kann, welches im Gegensatz zu bekannten Wohnwagen oder Wohnmobilen vollständig als Wohngebäude für ein dauerhaftes Wohnen ausgestattet ist und mit einer hinreichend starken thermischen Isolationslage versehen werden kann, durch die die Temperaturschwankungen im Innenraum der Wohneinheit auch bei starker Sonneneinstrahlung auf ein akzeptables Maß reduziert werden können.

Ein weiterer Vorteil des erfindungsgemäßen Gebäudesystems besteht darin, dass die Wohneinheit aufgrund ihres länglichen rechteckigen Bodenrahmens sowie des mit ihrem Aufbau verbundenen geringen Gewichts auf einem herkömmlichen Pkw-Anhänger mit einem Pkw als Zugfahrzeug von einer Privatperson allein an einen gewünschten Ort transportiert und dort allein ohne zusätzliche Hilfe auf einer entsprechend vorbereiteten Bodenfläche abgestellt werden kann. Derartige Bodenflächen bzw. Abstellplätze für die Wohneinheit können beispielsweise auf Campingplätzen geschaffen werden, und müssen lediglich Strom- und Frischwasserzuleitungen sowie Abwasserleitungen bereitstellen.

Sofern es gewünscht ist, kann die erfindungsgemäße Wohneinheit alternativ auch sehr raumsparend in einem Lagergebäude aufgenommen werden, wobei wenigstens zwei, bevorzugt jedoch auch drei Wohneinheiten in dem aus entsprechenden Stahlprofilen gefertigten Lagergebäude übereinander angeordnet werden. Um den erforderlichen Raumbedarf hierbei weiter zu verringern, können mehrere solcher Lagergebäude mit übereinander angeordneten Lagerplätzen zur Aufnahme der Wohneinheiten nebeneinander angeordnet werden, wodurch sich an Orten mit hohen Bodenpreisen die Wohnkosten für jede in einem solchen Lagergebäude aufgenommenen Wohneinheit abermals entsprechend verringern lassen. Hierbei stellt es einen besonderen Vorteil des erfindungsgemäßen Gebäudesystems dar, dass sich die Wohneinheiten unabhängig voneinander in einer beliebigen Reihenfolge in die entsprechenden Aufnahmeplätze des Gebäudesystems einsetzen, bzw. wieder entfernen lassen, was einen in hohem Maße flexiblen Wechsel von Wohneinheiten ermöglicht.

Die Erfindung wird nachfolgend mit Bezug auf die Zeichnungen anhand bevorzugter Ausführungsformen beschrieben. In den Zeichnungen zeigen:
- Fig. 1: eine schematische Frontansicht einer erfindungsgemäßen Wohneinheit,
- Fig. 2: eine schematische räumliche Seitenansicht einer auf einen Transportanhänger aufgesetzten erfindungsgemäßen Wohneinheit,
- Fig. 2a: eine vergrößerte ausschnittsweise Darstellung der Wohneinheit von Fig. 2,
- Fig. 2b: eine schematische räumliche Seitenansicht der Wohneinheit von Fig. 2 mit teilweise, bzw. vollständig heruntergeklappten Terrassenelementen,
- Fig. 2c: die Wohneinheit von Fig. 2b mit vollständig heruntergelassenen Terrassenelementen,
- Fig. 3: eine schematische räumliche Seitenansicht einer erfindungsgemäßen Wohneinheit nach dem Abladen derselben von einem Pkw-Transportanhänger mittels Hubkurbelstützen,
- Fig. 3a: die Wohneinheit von Fig. 3 während des Anhebens derselben mit einem Gabelstapler und alternativ dargestellten vollständig heruntergelassenen Hubstützen,
- Fig. 3b: eine schematische Darstellung eines PKW-Transportanhängers mit einer darauf angeordneten Adapterplattform zur Aufnahme und Befestigung einer erfindungsgemäßen Wohneinheit,
- Fig. 4: eine schematische räumliche Frontansicht eines erfindungsgemäßen Lagergebäudes mit drei darin übereinander angeordneten Lagerplätzen und in diesen aufgenommenen Wohneinheiten, und
- Fig. 4a: eine Rückansicht des Lagergebäudes von Fig. 4 ohne Wohneinheiten.

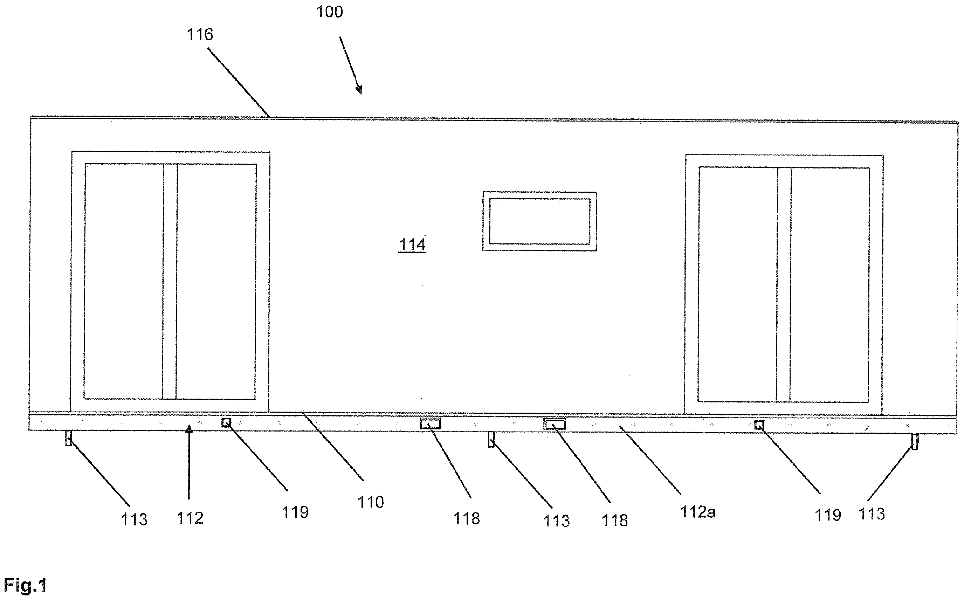

Wie in den Figuren 1 bis 4a gezeigt ist, umfasst ein Gebäudesystem 1 eine mobile Wohneinheit 100, die durch ein Zugfahrzeug, insbesondere einen Pkw oder einen Lkw, von einem ersten Ort zu einem zweiten Ort bewegt werden kann. Die Wohneinheit 100 besitzt einen Boden 110 mit einem länglichen eigensteifen Bodenrahmen 112 aus Rahmenprofilen 112a, die bevorzugter Weise als U- oder Rechteckprofile ausgeführt sind, auf denen eine nicht näher bezeichnete begehbare Bodenfläche, beispielsweise Kunststoff- oder Holzplatten, befestigt ist, die bevorzugt mit einer Trittschalldämmung gegen die Ausbreitung von Körperschall belegt ist.

Die Profile des Bodenrahmens bestehen bevorzugt aus Metall, insbesondere Stahl- oder Aluminiumblech, können jedoch zur Erzielung eines besonders niedrigen Gewichts der Wohneinheit 100 auch aus Kohlefaser-Verbundwerkstoff, z.B. aus kohlefaserverstärktem Kunststoff, gefertigt sein.

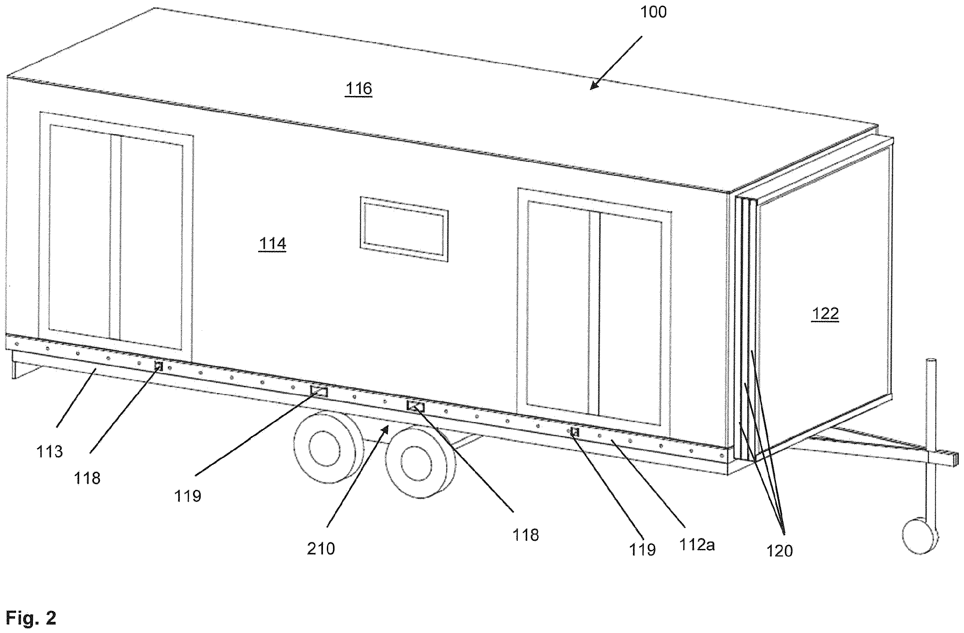

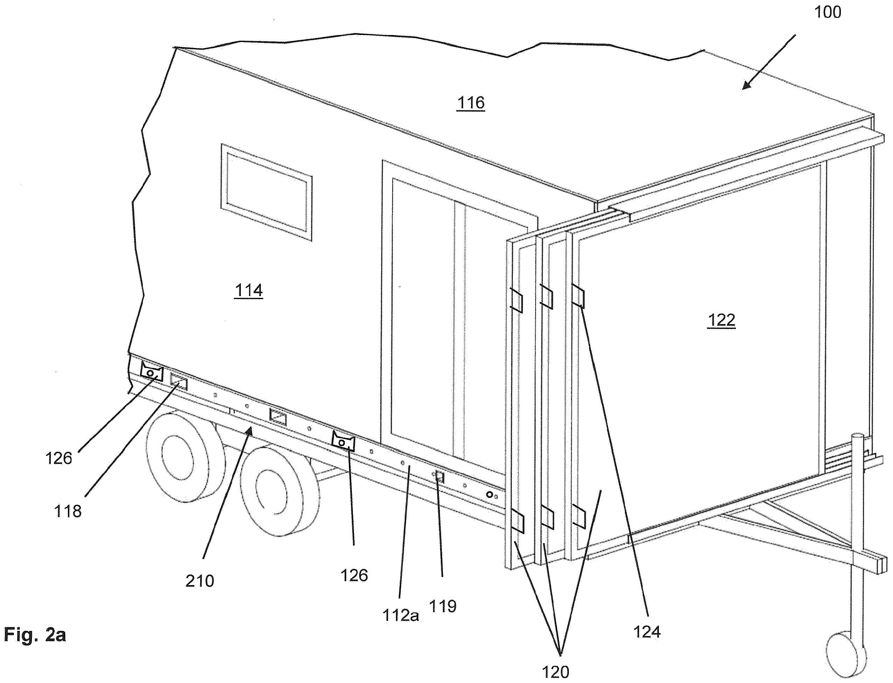

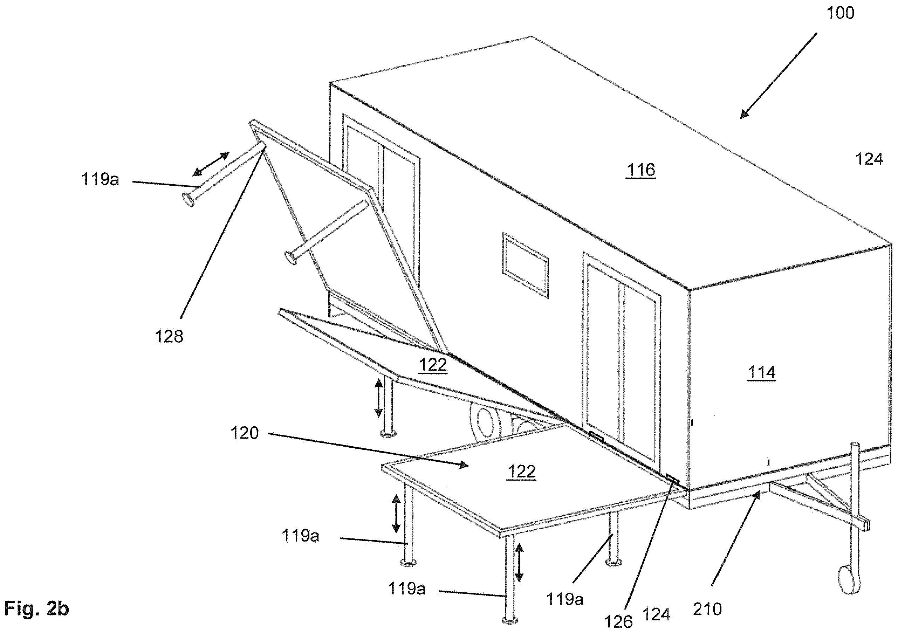

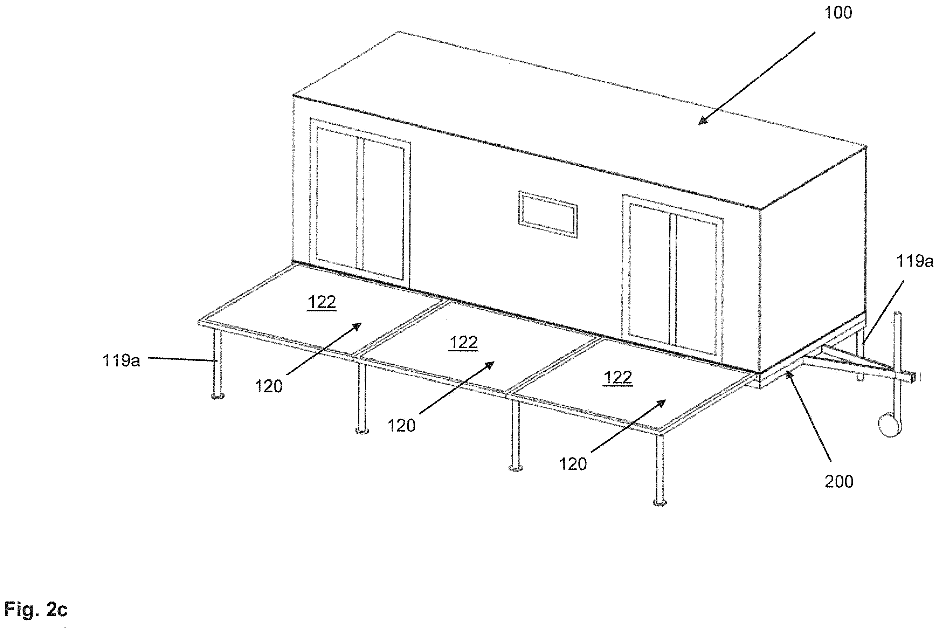

Auf dem eigensteifen Bodenrahmen 112 sind thermisch isolierte, nicht selbstragende Seitenwand- und Deckenelemente 114,116 befestigt, die den Innenraum der Wohneinheit 100 umgrenzen, wobei die Transportplattform 200 dazu angepasst ist, den Bodenrahmen 112 der Wohneinheit 100 zum Transport von einem ersten Ort zu einem zweiten Ort lösbar aufzunehmen. Gemäß der Darstellung von Fig. 1 und 2 sind wenigstens auf der frontseitigen Seitenwand 114 der Wohneinheit 100 nicht näher bezeichnete Tür- und Fensterelemente vorgesehen, durch die hindurch der Innenraum der Wohneinheit 100 von außen her zugänglich ist.

Wie in den Figuren 1 und 2 weiterhin gezeigt ist, weist der längliche rechteckige Bodenrahmen 112 auf wenigstens einer, bevorzugt jedoch auf beiden seiner einander gegenüberliegenden Längsseiten Huböffnungen 118 auf, die paarweise in den beiden parallel zueinander verlaufenden längsseitigen Rahmenprofilen 112a geformt sind. Die beiden Huböffnungen 118 sind dabei bevorzugt beiderseits der Mittenachse in die sich in Längsrichtung des Bodenrahmens 112 erstreckenden Rahmenprofile 112a des Bodenrahmens 112 eingebracht, wobei der Abstand zwischen den beiden Öffnungen für die Hubzinken 412a, 412b eines Gabelstaplers 400 bevorzugt ca. 1,0 bis 2,0 m beträgt. Hierdurch ist eine ausreichende Kippstabilität beim Anheben derselben gewährleistet.

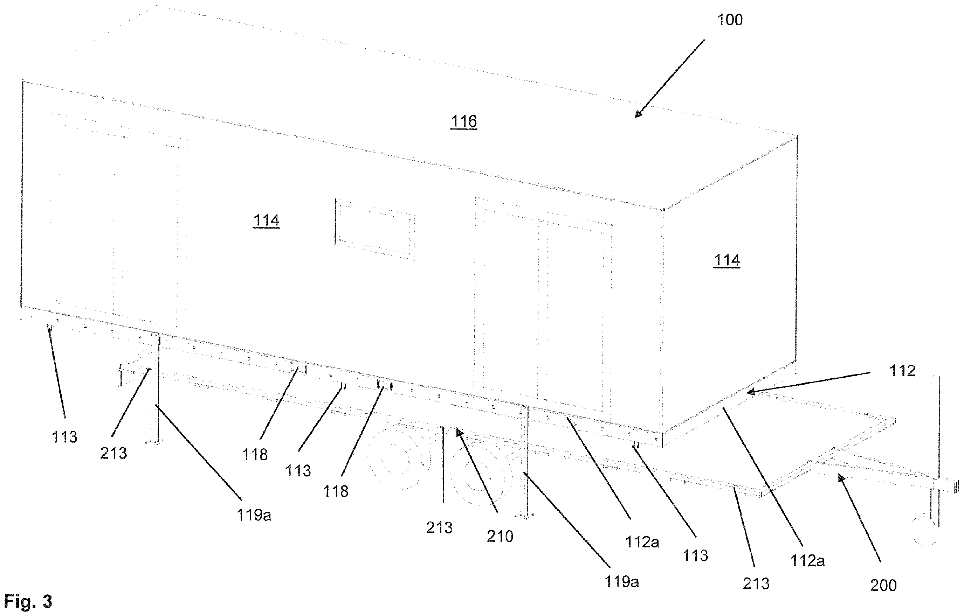

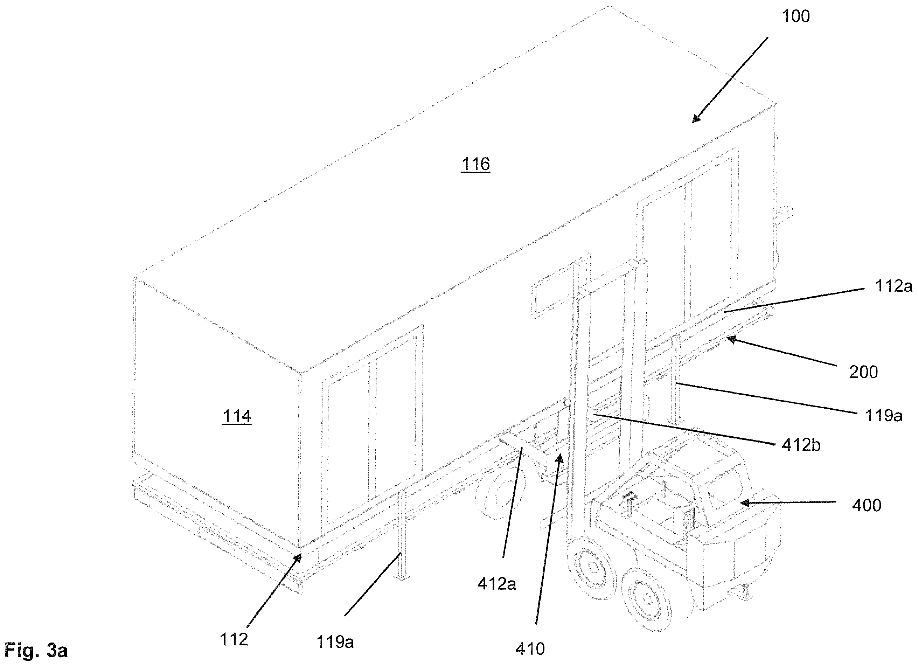

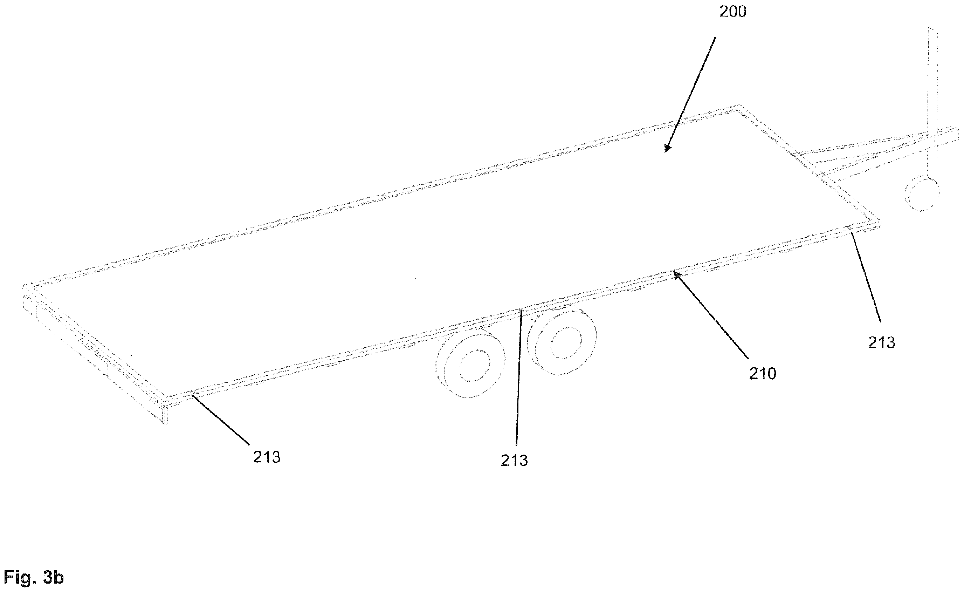

Die Huböffnungen 118 sind bevorzugt als Taschen ausgeführt, die jeweils im hohlen Innenraum eines bevorzugt geschlossenen rechteckigen Rahmenquerprofils geformt sind (nicht gezeigt), welches zwischen den beiden längsseitigen Rahmenprofilen 112a des Bodenrahmens 112 nach Art einer Traverse (nicht gezeigt) angeordnet ist, die mit den beiden längsseitigen Rahmenprofilen 112a insbesondere formschlüssig verbunden, bevorzugt verschweißt ist. Das frontseitige Rahmenprofil 112a der beiden längsseitigen Rahmenprofile 112a des Bodenrahmens 112 ist in Fig. 1 und 2 gezeigt. In die Huböffnungen 118 können die in der Regel in ihrem Abstand zueinander verstellbaren Zinken der Hubgabel 410 des Gabelstaplers 400 eingeführt werden, wie dies beispielhaft in Fig. 3 a gezeigt ist.

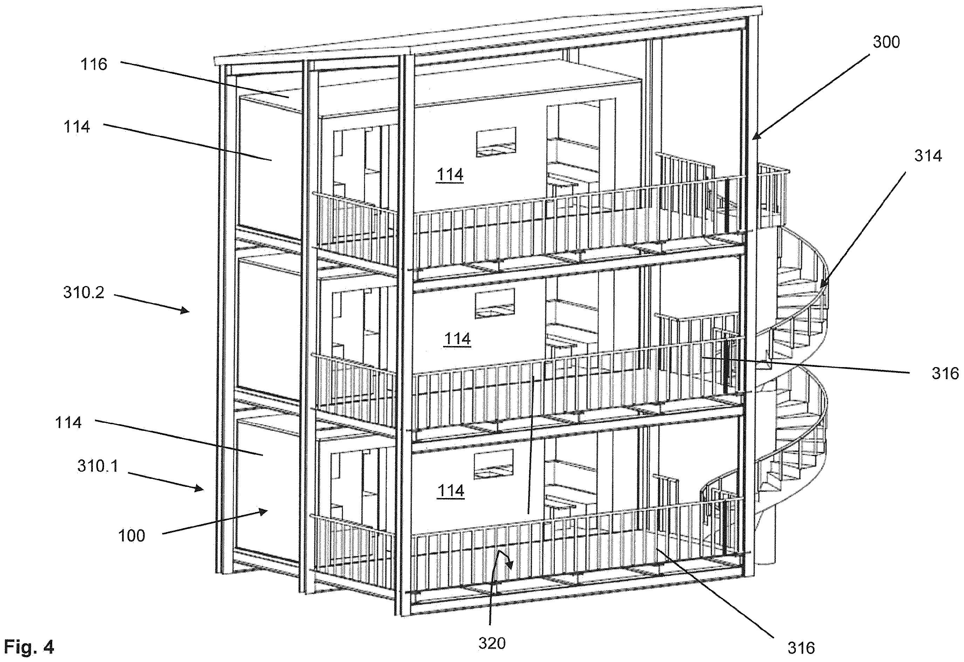

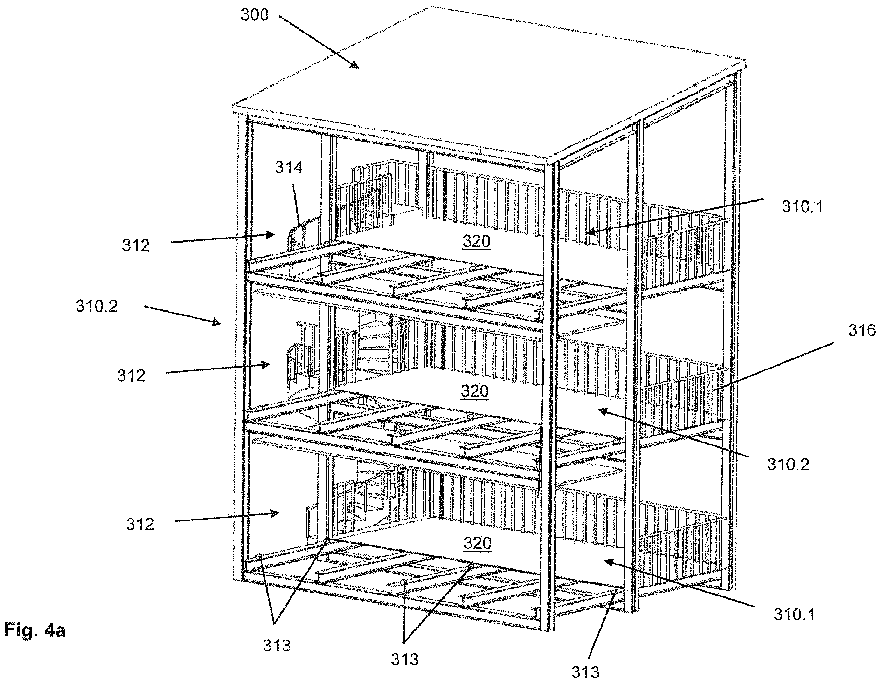

Das erfindungsgemäße Gebäudesystem 1 umfasst weiterhin ein in Fig. 4 und 4a gezeigtes Lagergebäude 300, welches bevorzugt aus miteinander verschweißten oder verschraubten Stahl-Profilträgern aufgebaut ist. In dem Lagergebäude 300 sind, wie in Fig. 4 und 4a dargestellt, wenigstens zwei, bevorzugt jedoch drei oder gar mehr Lagerplätze 310.1, 310.2 angeordnet, die jeweils über eine Treppe 314 zugänglich sind. Jeder der Lagerplätze 310.1, 310.2 besitzt eine Einschuböffnung 312, durch die hindurch eine Wohneinheit 100 mit Hilfe eines Gabelstaplers 400, der die Wohneinheit 100 mit den Zinken 412a, 412b seiner Hubgabel 410 an den beiden Huböffnungen 118 aufnimmt (Fig. 3a), in den jeweiligen Lagerplatz 310.1, 310.2 eingesetzt werden kann, nachdem diese auf die jeweilige Höhe des betreffenden Lagerplatzes angehoben wurde.

Bei der bevorzugten Ausführungsform der Erfindung ist der Bodenrahmen 112 rechteckförmig und besitzt eine Breite von weniger als 3m und eine Länge von weniger als 11 m. Bei der besonders bevorzugten Ausführungsform besitzt der Bodenrahmen 112 eine lichte Breite im Bereich von 2,5 m und eine Länge von 9 m, wodurch sich eine optimale Transportabilität auf öffentlichen Straßen mit einem PKW als Zugfahrzeug ergibt.

Gleichzeitig oder alternative besitzt die Wohneinheit 100, die in verschiedenen Abmessungen gefertigt werden kann, einschließlich der fest darin verbauten Einbauten, ein Gewicht von weniger als 3,5 t, bevorzugt weniger als 2,5 t und besonders bevorzugt ein Gewicht von weniger als 1,5 t. Hierdurch ergibt sich der Vorteil, dass die Transportplattform 200 als PKW-Anhänger ausgeführt werden kann, dessen Gesamtgewicht einschließlich Wohneinheit weniger als 3,5 t beträgt (2,5 Tonnen für die Wohneinheit und ca. 1 Tonne für den Anhänger selbst). Dies erlaubt es, die Wohneinheit 100 mit Hilfe eines geeigneten PKWs z.B. eines SUVs, ohne Sondergenehmigung und Sonderfahrerlaubnis über öffentliche Straßen zu transportieren, was den Einsatzbereich des erfindungsgemäßen Gebäudesystems 1 im Vergleich zu bekannten Containern, die ausschließlich mit einem LKW auf einem Tieflader transportiert werden können, erheblich erweitert.

Um dieses gegenüber einem bekannten Container wesentlich geringere Gewicht zu erreichen, besitzen die Seitenwandelemente 114, die auch die Rückwand umfassen und zur Verbesserung der Wärmedämmung bevorzugt keine Fensteröffnungen aufweisen, sowie auch Deckenelemente 116 der Wohneinheit 100 eine Sandwichstruktur, die an den Ecken bevorzugt verklebt oder auch mit Hilfe von geeigneten Profilen verschraubt ist, so dass sich im Gegensatz zu den deutlich schwereren (stapelbaren) Containern der eingangs erwähnte nicht selbstragende Aufbau der Wohneinheit ergibt, welcher überhaupt erst eine Umsetzung des erfindungsgemäßen Konzepts in kostengünstiger Weise ermöglicht.

Die Sandwichstruktur der Seitenwandelemente 114 und des oder der Deckenelemente 116 umfasst erfindungsgemäß eine erste äußere Decklage aus armiertem Kunststoff, bevorzugt glasfaserverstärktem oder auch kohlefaserverstärktem Kunststoff, eine zentrale Lage aus einem Isolationsmaterial, bevorzugt einem Vakuumisolationsmaterial und eine innenseitige Decklage aus Holz und/oder einem armierten, bevorzugt faserverstärkten Kunststoff. Die Lagen sind miteinander durch Klebstoff, insbesondere Polyurethan, verklebt. Hierbei kann es zur Verbesserung des Brandschutzes vorgesehen sein, dass zwischen der äußeren Decklage aus armiertem Kunststoff und der zentralen Lage aus Isolationsmaterial eine Lage aus einem feuerhemmenden Kunststoffmaterial angeordnet ist, welche wenigstens 30 Gew. - % Magnesiumhydroxid oder Aluminiumhydroxid enthält.

Bei der bevorzugten Ausfuhrungsform der Erfindung umfasst die zentrale Lage aus Isolationsmaterial eine Vielzahl von aneinander gesetzten plattenförmigen Isolationselementen, die einen von einer luftundurchlässigen, insbesondere mit Metall bedampften Hülle umschlossenen Trägerkern aus pulverförmigem oder granuliertem Kunststoff- oder einem pulverförmigen oder granulierten Mineralstoff, insbesondere Magnesiumcarbonat, besitzen. Dieser wird evakuiert, und ist dadurch nach der Fertigstellung des jeweiligen Wand/Deckenelements 113, 114 fortlaufend mit Unterdruck beaufschlagt, so dass sich eine gegenüber dem Grundmaterial des Trägerkerns durch den Unterdrück zusätzlich versteifte Plattenstruktur ergibt, die mit Hilfe des Klebstoffs auf die äußere Decklage aus armiertem Kunststoff, bzw. die flammhemmende Lage, sofern vorhanden, und/oder die innenseitige Decklage aufgeklebt ist. Die Hülle kann z.B. aus einer mit Aluminium bedampften oder beschichteten thermoplastischen Kunststofffolie bestehen.

Nach einem weiteren der Erfindung zugrunde liegenden Gedanken ist die verfahrbare Transportplattform 200 ein in Fig. 3b gezeigter PKW-Anhänger, auf welchem eine Adapterplattform 210 montiert ist, auf der der Bodenrahmens 112 der Wohneinheit 100 für den Transport lösbar befestigt werden kann. Die Adapterplattform 210 kann entweder nachträglich als eigenes Bauteil auf dem Rahmen eines bekannten PKW-Anhängers montiert werden, oder aber integral mit dem PKW-Anhänger ausgeführt sein, wodurch sich das Gewicht desselben einschließlich der Adapterplattform 210 noch einmal reduzieren lässt.

Weiterhin ist es denkbar, dass eine oder auch mehrere Adapterplattformen 210 auf einem LKW, einem Bahnzug oder auch einem Boot/Schiff montiert werden (nicht gezeigt), um z.B. zwei oder mehr Wohneinheiten gleichzeitig von einem Ort zu einem anderen Ort zu transportieren. Das Be- und Entladen erfolgt in diesem Falle bevorzugt mit Hilfe eines Gabelstaplers 400 durch Einführen der Hubzinken 412a, 412b in die Huböffnungen 118 in den seitlichen Rahmenprofilen 112a.

Darüber hinaus besteht die Möglichkeit, die Adapterplattform 210 auf der ebenen Dachfläche eines Flachdachgebäudes zu befestigen, um eine erfindungsgemäße Wohneinheit 100 nachträglich zur Schaffung zusätzlichen Wohnraums zu verwenden.

Hierbei ist es ein besonderer Vorteil der Erfindung, dass die Wohneinheit 100 aufgrund ihres im Vergleich zu herkömmlichen gemauerten Gebäudekonstruktionen geringen Gewichts ohne aufwändige Bautätigkeiten und eine statische Verstärkung der Struktur des Flachdachgebäudes auf dieses aufgesetzt werden kann, beispielsweise mit einem Autokran, der die Wohneinheit 100 beispielsweise über die Öffnungen 119 ergreift und auf der Adapterplattform 210 positioniert, die zuvor auf dem Flachdach montiert wurde.

Um beim Transport der erfindungsgemäßen Wohneinheiten 100 mit Hilfe einer als PKW-Anhänger ausgeführten Transportplattform 200 das Be- und Entladen des Anhängers auch für weniger geübte Personen so einfach wie möglich zu gestalten, und überdies eine horizontale Ausrichtung des Bodens 110 der Wohneinheit 100 auch auf unebenen Untergründen zu ermöglichen, sind auf einander gegenüberliegenden Seiten des eigensteifen Bodenrahmens 112 weiterhin Aufnahmen 119 zur lösbaren Befestigung von Hubstützen 119a, insbesondere Kurbelstützen, angeordnet, über die der Bodenrahmen 112 mit der darauf angeordneten Wohneinheit 100 in vertikaler Richtung angehoben werden kann.

Bevorzugt sind hierzu, wie in Fig. 1 gezeigt, auf jeder Längsseite des Bodenrahmens 112 zwei Öffnungen 119 für Hubstützen 119a in jedes der beiden längsseitigen Rahmenprofile 112a eingebracht. Jede der bevorzugt als bekannte Klappkugelstütze ausgeführten Hubstützen 119a kann dabei ein Gewicht von z.B. 8 - 20 Kg aufweisen und eine Ausgleichshöhe von z.B. 30 cm besitzen. Der Vorteil des Einsatzes der Kurbelstützen ist darin zu sehen, dass diese während des Transports der Wohneinheit in deren Innenraum verstaut werden können, und aufgrund ihres vergleichsweise geringen Gewichts problemlos von einer Person allein am Bodenrahmen 112 montiert werden können. Hierdurch ergibt sich der weitere Vorteil, dass die Wohneinheit von einer Person allein ohne fremde Hilfe auf die Transportplattform aufgesetzt, bzw. von dieser abgenommen werden kann.

Um die Wohneinheit 100 von einer Transportplattform 200 in Form eines PKW-Anhängers abzuladen, nachdem diese an einen gewünschten Ort verbracht wurde, werden die horizontal verlaufenden, nicht näher gezeigten Abschnitte der Hubstützen 119a in die jeweiligen Aufnahmeöffnungen 119 des eigensteifen Bodenrahmens 112 eingesteckt und die Hubstützen 119 sukzessive umlaufend nacheinander ausgefahren, wobei der Ausfahrweg bei einem Umlauf um die Wohneinheit 100 jeweils z.B. im Bereich von 1 bis 5 cm liegen kann. Im Falle von Kurbelstützen kann hierzu ein bekannter Akkuschrauber eingesetzt werden, um die mit dem Hochfahren der Wohneinheit verbundene körperliche Anstrengung für die betreffende Person weiter zu verringern. Nachdem die Wohneinheit 100 soweit angehoben wurde, dass ein hinreichender Freiraum zwischen der Unterseite des Bodenrahmens 112 und der Transportplattform 200 besteht, wie dies in Fig. 3 angedeutet ist, kann der PKW-Anhänger zwischen den Hubstützen 119a hindurch unter der Wohneinheit 100 heraus gezogen werden, wenn dieser für einen anderen Transport benötigt wird und die Wohneinheit für einen längeren Zeitraum an dem betreffenden Ort verbleiben soll.

Für den Fall, dass die Wohneinheit nur temporär, z.B. für einige Tage, an dem betreffenden Ort aufgestellt werden soll, wenn die Wohneinheit z.B. ähnlich einem Wohnwagen zum Reisen zu verschiedenen Orten innerhalb eines Zeitraums von z.B. 2 Wochen genutzt wird, kann der PKW-Anhänger unter der Wohneinheit 100 verbleiben, wodurch sich der Vorteil ergibt, dass dieser keinen zusätzlichen Stellraum benötigt. Dies ist insbesondere auf Campingplätzen von großem Nutzen, da hierdurch die Kosten in der Regel geringer gehalten werden können.

Um den Wohnkomfort des erfindungsgemäßen Gebäudesystems 1 weiter zu erhöhen, wenn die Wohneinheit 100 auf einer Freifläche abgestellt wird, z.B. auf einem Grundstück im Grünen, kann das Gebäudesystem 1 weiterhin wenigstens ein, bevorzugt jedoch drei oder auch mehr Terrassenelemente 120 mit einer begehbaren Trittfläche 122 umfassen, die nach dem Aufstellen und Ausrichten der Wohneinheit 100 mit Hilfe der Hubstützen 119a an der Frontseite und/oder an den Stirnseiten der Wohneinheit 100 befestigt werden, wie dies in Fig. 2b und 2c angedeutet ist.

Jedes der während des Transports der Wohneinheit 100 bevorzugt an einer Stirnseite der Wohneinheit 100 in einer entsprechenden, nicht näher bezeichneten Halterung aufgenommenen Terrassenelemente 120 (Fig. 2a) besitzt hierzu eine Trittfläche 122 sowie wenigstens eine Lasche 124, die an der Außenseite des Terrassenelements 120, insbesondere an einem Rahmen desselben befestigt ist, welcher die Trittfläche 122 trägt, wie dies in Fig. 2a angedeutet ist. Die Lasche oder Laschen werden zur Befestigung des Terrassenelements 120 an einer Längsseite der Wohneinheit 100 in eine Laschen-Aufnahme 126 eingehängt, die jeweils über in den Figuren 2 und 2a angedeutete, nicht näher bezeichnete Gewindebohrungen an das Rahmenlängsprofil 112a angeschraubt werden können, wie dies in Fig. 2b der Übersichtlichkeit wegen lediglich für das erste Terrassenelement 120 angedeutet ist. Vorzugsweise werden insgesamt drei Terrassenelemente 120 mit jeweils einer Tiefe von bevorzugt 2,3 m und einer Länge von 2,3 m für jede Wohneinheit 100 eingesetzt. Hierdurch sind die Terrassenelemente 120, die bevorzugt einen rechteckigen Rahmen aus Aluminiumprofilen besitzen, auf welchem die Trittflächen 122 befestigt sind, auch von einer Person bzw. zwei Personen noch zu handhaben, und können aus der Transporthalterung an der Stirnseite der Wohneinheit 100 herausgezogen und durch Einführen der jeweiligen Laschen 124 in die ggf. zuvor montierten Laschen-Aufnahmen 126 an der Längsseite der Wohneinheit 100 angebracht werden. Die Laschen 124 und Laschen-Aufnahmen 126 sind der Übersichtlichkeit halber beispielhaft nur in Fig. 2a und 2b gezeigt.

Weiterhin kann es vorgesehen sein, dass die Terrassenelemente 120 inklusive der Trittfläche 122 über ein Scharnier (nicht gezeigt) klappbar mit dem Bodenrahmen 112 verbunden sind, um diese bei Bedarf hochklappen zu können, wie dies für das hintere und mittlere Terrassenelement 120 in Fig. 2b exemplarisch angedeutet ist. Durch die hoch geklappten Trittflächen 122, die in der vertikalen Position bevorzugt durch ein Schloss gesichert werden, ergibt sich in vorteilhafter Weise ein wirksamer Einbruchsschutz. Hierzu können die Laschen 124 z.B. über ein Scharnier gelenkig an der Außenseite der Rahmen der Terrassenelemente 120 aufgenommen sein.

Darüber hinaus sind an der Unterseite der Terrassenelemente 120 Aufnahmen 128 zur lösbaren Befestigung von Hubstützen 119a angeordnet, über welche das betreffende Terrassenelement 120 auf einem befestigten Untergrund abstützbar ist. Die Hubstützen 119a können im einfachsten Falle bekannte Teleskopstützen sein, die z.B. über eine im inneren Element angeordnete Lochreihe und eine im äußeren Stützenelement geformte Durchgangsbohrung mittels eines Bolzens in der Länge einstellbar sind, um die Trittflächen 122 der Terrassenelemente auch bei Unebenheiten der Stellfläche horizontal ausrichten zu können.

Das Aufladen der Wohneinheit auf einen PKW-Transportanhänger erfolgt in der umgekehrten Reihenfolge dadurch, dass zunächst die Terrassenelemente 120 hochgeklappt und verriegelt, bzw. demontiert und in die stirnseitige Transporthalterung eingeschoben werden, wie dies in Fig. 2c gezeigt ist. Anschließend wird der PKW-Anhänger unter den Bodenrahmen 112 der Wohneinheit 100 geschoben und diese durch Betätigen der Hubstützen 119a sukzessive abgesenkt, bis der eigensteife Bodenrahmen 112 mit seiner Unterseite auf der Adapterplattform 210 des Anhängers aufliegt. Schließlich werden die Hubstützen 119a aus den Aufnahmen 119 entfernt und in der Wohneinheit, bzw. im Zugfahrzeug verstaut.

Um während des Transports der Wohneinheit 100 auf einem als Transportplattform 200 ausgeführten PKW-Anhänger, sowie auch nach dem Einsetzen der Wohneinheit in einen Lagerplatz 310.1 und 310.2 eines Lagergebäudes 300 diese gegen ein Verrutschen zu sichern, sind bei der bevorzugten Ausführungsform an der Unterseite des Bodenrahmens 112 eine Vielzahl von sich vom Bodenrahmen 112 weg in Abwärtsrichtung erstreckende Zapfen 113 angeordnet, welche unter Erzeugung einer formschlüssigen Verbindung in zugeordnete vertikale Aufnahmeöffnungen 213 in der Transportplattform 200 und zugeordnete vertikale Aufnahmeöffnungen 312 im Bodenbereich eines Lagerplatzes 310.1, 310.2 des Lagergebäudes 300 einführbar sind. Bevorzugt sind an der Unterseite der in Längsrichtung verlaufenden Rahmenprofile 112a jeweils zwei oder auch drei oder mehr Zapfen geformt, deren freies Ende sich in vorteilhafter Weise konisch verjüngt, um das Einführen des jeweiligen Zapfens 113 in die zugehörige Aufnahmeöffnung 213 in der Transportplattform 200, bzw. der Adapterplattform 210 des PKW-Anhängers sowie auch in die Öffnungen 312 im Bodenbereich eines Lagerplatzes 310.1, bzw. 310.2 (Fig. 4a) beim Absenken der Wohneinheit 100 zu erleichtern. Die Zapfen 113 und zugehörigen Aufnahmeöffnungen sind in den Figuren 3 und 4a zur leichteren Erkennbarkeit vergrößert eingezeichnet.

Um die Wohneinheit 100 während des Transports auf dem PKW-Anhänger formschlüssig zu fixieren, kann im Bereich des freien Endes eines Zapfens 113 eine diametrale Bohrung geformt sein (nicht dargestellt), in die ein Sicherungssplint von Hand einführbar ist, welcher die Zapfen 113 gegen ein Herausrutschen aus der jeweiligen Aufnahmeöffnung 213, bzw. 313 sichert.

Nach einem weiteren der Erfindung zugrunde liegenden Gedanken sind die oberhalb eines untersten Lagerplatzes 310.1 angeordneten Lagerplätze 310.2 des Lagergebäudes 300 auf der der Einschuböffnung 312 und der Treppe 314 gegenüberliegenden Seite, wie in Fig. 4 und 4 gezeigt, bevorzugt mit einer Absturzsicherung 316, insbesondere ein Geländer versehen. Weiterhin weisen zumindest die oberhalb eines untersten Lageplatzes 310.1 angeordneten Lagerplätze 310.2 des Lagergebäudes 300 eine begehbare Terrassenfläche 320 auf, die sich nach dem Einsetzen eine Wohneinheit 100 in den Lagerplatz 310.1, bzw. 310.2 bevorzugt bündig bis an das längsseitige Rahmenprofil 112a auf der Frontseite der Wohneinheit 100, bzw. an die Außenseite des frontseitigen Seitenwandelements 114 der Wohneinheit heran erstreckt, wie dies in Fig. 4 angedeutet ist. Die begehbare Terrassenfläche 320 ist bevorzugt fest mit den horizontal verlaufenden Profilträgern des Lagergebäudes 300 verbunden. Sie besitzt bevorzugt eine Breite, die wenigstens der Länge der Wohneinheit 100 entspricht, und weist eine Tiefe von bevorzugt wenigstens 2 m auf, die bei der bevorzugten Ausführungsform 3,5 m beträgt.

Das Einsetzen der Wohneinheit 100 in einen Lagerplatz 310.1, 310.2 mit Hilfe des Gabelstaplers 400 durch die Einschuböffnung 312 hindurch erfolgt in erfindungsgemäßer Weise mit einer Längsseite der Wohneinheit, bzw. des Bodenrahmens 112 voraus, d.h. von hinten her. Hierdurch ergibt sich der Vorteil, dass die Wohneinheiten 100 mit Ihren Tür- und Fensteröffnungen in der Endposition unmittelbar an die jeweilige Terrassenfläche 320 angrenzen, welche in jedem der oberen Lagerplätze 310.2 vorgesehen ist. Die Terrassenflächen 320 dienen hierbei als ein über die Absturzsicherung 316 abgesicherter Zutrittsbereich, welcher über die seitlich angeordnete Treppe 314 aus zugänglich ist.

Ein weiterer Vorteil, der sich dadurch ergibt, dass die Einschuböffnungen 312 auf der der Absturzsicherung 316 gegenüberliegenden Seite der Lagerplätze 310.2 angeordnet sind, und die Wohneinheit 100 durch die Einschuböffnung 312 hindurch mit ihrem eine Tür- und/oder Fensteröffnung aufweisenden Seitenwandelement in Richtung auf die Absturzsicherung 316 zu in den Lagerplatz 310.2 eingeschoben wird, ist darin zu sehen, dass drei oder mehr Reihen mit zwei oder mehr übereinander liegenden Wohneinheiten 100 in einer Kreisformation angeordnet werden können, um einen innenliegenden zentralen Raumbereich zu umgrenzen, welcher z.B. als gemeinsam genutzter Innenhof genutzt werden kann. Hierbei sind die Einschuböffnungen 312 auf den dem zentralen Raumbereich abgewandten Rückseiten der Lagerplätze 310.1, 310.2 angeordnet, was ein Beladen der Lagerplätze mit Hilfe eines Gabelstaplers 400 aufgrund der freien Zugänglichkeit erleichtert.

Nach einem weiteren der Erfindung zugrunde liegenden Gedanken umfasst ein Verfahren zum Transport und zum Einbringen einer Wohneinheit 100 in ein Lagergebäude 300 eines zuvor beschriebenen Gebäudesystems 1 die folgenden Verfahrensschritte:
Zunächst wird die Wohneinheit 100 in einer Höhe, z.B. 0,3 m oberhalb der Transportplattform 200, d.h. im Falle eines PKW-Anhängers über der Adapterplattform 210, welche auf diesem montiert, oder integral mit diesem gebildet ist, positioniert. Danach wird die Wohneinheit 100 auf die Transportplattform 200 abgesenkt und der Bodenrahmen 112 an der Transportplattform 200 für den Transport fixiert. Im Anschluss daran wird die Transportplattform 200 mit der darauf befestigten Wohneinheit 100 zu einem Lagergebäude 300 des Gebäudesystems 1 transportiert und der Bodenrahmen 112 von der Transportplattform 200 gelöst, beispielweise durch Entfernen der zuvor erwähnten Splinte.

Als nächstes werden die beiden Hubzinken 412a, 412b der Hubgabel 410 eines Gabelstaplers 400 in die Huböffnungen 118 des Bodenrahmens 112 im Bereich der Rückseite der Wohneinheit 100, welche bevorzugt keine Tür- und Fensteröffnungen aufweist, eingeführt, und die Wohneinheit 100 auf die Höhe eines nicht belegten Lagerplatzes 310.1, 310.2 im Lagergebäude 300 angehoben. Schließlich wird die Wohneinheit 100 vor der Einschuböffnung 312 positioniert und diese mittels des Gabelstaplers 400 mit ihrer die Tür- und Fensteröffnungen aufweisenden Frontseite durch die Einschuböffnung 312 hindurch in den Lagerplatz 310.1, 310.2. eingesetzt. Dabei werden die zuvor erwähnten Zapfen 113 an der Unterseite des eigensteifen Bodenrahmens 112 in die jeweiligen Aufnahmeöffnungen 313 im Boden des Lagerplatzes 310.1, 310.2, die insbesondere in den, oder an den horizontal verlaufenden Profilträgern des Lagergebäudes 300 angeordnet sind, eingeführt. Hierdurch wird eine formschlüssige Verbindung zwischen dem Lagergebäude 300 und dem eigensteifen Bodenrahmen 112 der Wohneinheit 100 erzeugt, die die Wohneinheiten gegen ein Verrutschen sichert und die Steifigkeit des Lagergebäudes 300 insgesamt erhöht. Letztendlich können die Zapfen 113 gewünschten Falls in den Aufnahmeöffnungen 313 noch durch nicht näher gezeigte Sicherungssplinte gesichert werden.

### Liste der Bezugszeichen

- 1: erfindungsgemäßes Gebäudesystem
- 100: Wohneinheit
- 110: Boden der Wohneinheit
- 112: eigensteifer Bodenrahmen
- 112a: Rahmenprofile
- 113: Zapfen
- 114: Seitenwandelemente
- 116: Deckenelement
- 118: Huböffnungen zum Einführen von Hubzinken
- 119: Aufnahmen für Hubstützen oder Kran-Seile
- 119a: Hubstützen
- 120: Terrassenelement
- 122: Trittfläche
- 124: Lasche
- 126: Laschen-Aufnahme
- 128: Aufnahmen an Terrassenelement zur Befestigung von Hubstützen
- 200: Transportplattform
- 210: Adapterplattform
- 213: Aufnahmeöffnungen für Zapfen in Transportplattform
- 300: Lagergebäude
- 310.1: unterer Lagerplatz
- 310.2: oberer Lagerplatz
- 312: Einschuböffnung
- 313: Aufnahmeöffhungen für Zapfen in Boden des Lagerplatzes
- 314: Treppe
- 316: Absturzsicherung/Geländer
- 320: begehbare Terrassenfläche
- 400: Gabelstapler
- 410: Hubgabel
- 412a: Hubzinken
- 412b: Hubzinken

## Patentansprüche

1. Gebäudesystem (1) umfassend eine mobile, durch ein Zugfahrzeug verfahrbare Transportplattform (200) und eine Wohneinheit (100), welche einen Boden (110) mit einem eigensteifen rechteckigen länglichen Bodenrahmen (112) aus Rahmenprofilen (112a) besitzt, auf welchem thermisch isolierte, nicht selbstragende Seitenwand- und Deckenelemente (114, 116) befestigt sind, die den Innenraum der Wohneinheit (100) umgrenzen, wobei die Transportplattform (200) dazu angepasst ist, den Bodenrahmen (112) der Wohneinheit (100) zum Transport von einem ersten Ort zu einem zweiten Ort lösbar aufzunehmen, wobei das Gebäudesystem (1) weiterhin ein Lagergebäude (300) mit wenigstens zwei übereinander angeordneten, jeweils eine Einschuböffnung (312) aufweisenden und über eine Treppe (314) zugänglichen Lagerplätzen (310.1, 310.2) umfasst, in die die Wohneinheit (100) durch die Einschuböffnung (312) hindurch mit einer Längsseite voraus quer einschiebbar ist, **dadurch gekennzeichnet, dass** der Bodenrahmen (112) auf wenigstens einer seiner Längsseiten zwei Huböffnungen (118) aufweist, in die die Hubzinken (412a, 412b) eines Gabelstaplers (400) zum Anheben der Wohneinheit (100) einführbar sind, und dass
die Seitenwand- und/oder Deckenelemente der Wohneinheit eine Sandwichstruktur besitzen, welche eine erste äußere Decklage aus armiertem Kunststoff, bevorzugt glasfaserverstärktem Kunststoff, eine zentrale Lage aus einem Isolationsmaterial, bevorzugt einem Vakuumisolationsmaterial und eine innenseitige Decklage aus Holz und/oder einem armierten, bevorzugt faserverstärkten Kunststoff umfasst, welche miteinander durch Klebstoff, insbesondere Polyurethan, verbunden sind, wobei zwischen der äußeren Decklage aus armiertem Kunststoff und der zentralen Lage aus Isolationsmaterial bevorzugt eine Lage aus einem feuerhemmenden Kunststoffinaterial angeordnet ist, welche wenigstens 30 Gew. - % Magnesiumhydroxid oder Aluminiumhydroxid enthält.

2. Gebäudesystem nach Anspruch 1,
**dadurch gekennzeichnet, dass**
der Bodenrahmen (112) eine lichte Breite von weniger als 3 m und eine Länge von weniger als 11 m besitzt, bevorzugt eine lichte Breite von 2,5 m und eine Länge von 9 m.

3. Gebäudesystem nach Anspruch 1 oder 2,
**dadurch gekennzeichnet, dass**
die Wohneinheit (100) ein Gewicht von weniger als 3,5 t, bevorzugt weniger als 2,5 t aufweist.

4. Gebäudesystem nach einem der vorhergehenden Ansprüche,
**dadurch gekennzeichnet, dass**
auf einander gegenüberliegenden Seiten des eigensteifen Bodenrahmens (112) Aufnahmen (119) zur lösbaren Befestigung von Hubstützen (1 19a), insbesondere Kurbelstützen, angeordnet sind, über die der Bodenrahmen (112) in vertikaler Richtung anhebbar ist.

5. Gebäudesystem nach einem der vorhergehenden Ansprüche,
**dadurch gekennzeichnet, dass**
die beiden Huböffnungen (118) als seitliche Öffnungen beiderseits der Mittenachse in die sich in Längsrichtung des Bodenrahmens (112) erstreckenden Rahmenprofile (112a) des Bodenrahmens (112) eingebracht sind.

6. Gebäudesystem nach einem der vorhergehenden Ansprüche,
**dadurch gekennzeichnet, dass**
dieses weiterhin wenigstens ein Terrassenelement (120) mit einer begehbaren Trittfläche (122) umfasst, an welchem wenigstens eine Lasche (124) angeordnet ist, die zur Befestigung des Terrassenelements (120) an einer Längsseite der Wohneinheit (100) in eine Laschen-Aufnahme (126) des Bodenrahmens (112) einhängbar ist.

7. Gebäudesystem nach Anspruch 6,
**dadurch gekennzeichnet, dass**
die Lasche (124) über ein Scharnier klappbar mit der Trittfläche (122) verbunden ist, und/oder dass an der Unterseite des Terrassenelements (120) Aufnahmen (128) zur lösbaren Befestigung von Hubstützen (119a) angeordnet sind, über welche das Terrassenelement (120) auf einem befestigten Untergrund abstützbar ist.

8. Gebäudesystem nach einem der vorhergehenden Ansprüche,
**dadurch gekennzeichnet, dass**
die verfahrbare Transportplattform (200) ein PKW-Anhänger ist, welcher eine Adapterplattform (210) zur Aufnahme des Bodenrahmens (112) umfasst, auf der der Bodenrahmen (112) für den Transport lösbar befestigbar ist.

9. Gebäudesystem nach einem der vorhergehenden Ansprüche,
**dadurch gekennzeichnet, dass**
die oberhalb eines untersten Lagerplatzes (310.1) angeordneten Lagerplätze (310.2) des Lagergebäudes (300) auf der der Einschuböffnung (312) und der Treppe (314) gegenüberliegenden Seite eine Absturzsicherung (316), insbesondere ein Geländer aufweisen.

10. Gebäudesystem nach Anspruch 9,
**dadurch gekennzeichnet, dass**
die Einschuböffnung (312) auf der der Absturzsicherung (316) gegenüberliegenden Seite des Lagerplatzes (310.2) angeordnet ist, und die Wohneinheit (100) durch die Einschuböffnung (312) hindurch mit einer Tür- und/oder Fensteröffnungen aufweisenden Seitenwand (113) einer Längsseite voraus in Richtung auf die Absturzsicherung (316) zu in den Lagerplatz (310.2) einschiebbar ist.

11. Gebäudesystem nach einem der vorhergehenden Ansprüche,
**dadurch gekennzeichnet, dass**
an der Unterseite des Bodenrahmens (112) eine Vielzahl von sich vom Bodenrahmen (112) weg in Abwärtsrichtung erstreckende Zapfen (113) angeordnet sind, welche unter Erzeugung einer formschlüssigen Verbindung in zugeordnete vertikale Aufnahmeöffnungen (213) in der Transportplattform (200) und zugeordnete vertikale Aufnahmeöffnungen (312) im Bodenbereich eines Lagerplatzes (310.1, 310.2) des Lagergebäudes (300) einführbar sind, um die Wohneinheit (100) auf der Transportplattform (200) oder dem Lagerplatz (310.1, 310.2) formschlüssig zu sichern.

12. Gebäudesystem nach einem der vorhergehenden Ansprüche,
**dadurch gekennzeichnet, dass**
zumindest die oberhalb eines untersten Lageplatzes (310.1) angeordneten Lagerplätze (310.2) des Lagergebäudes (300) eine begehbare Terrassenfläche (320) aufweisen, bis an die heran eine Wohneinheit (100) in die Einschuböffnung (312) hinein einsetzbar ist.

13. Gebäudesystem nach einem der Ansprüche 1 bis 12,
**dadurch gekennzeichnet, dass**
die zentrale Lage eine Vielzahl von aneinander gesetzten plattenförmigen Isolationselementen umfasst, die einen von einer luftundurchlässigen, insbesondere mit Metall bedampften Hülle umschlossenen Trägerkern aus pulverförmigem oder granuliertem Kunststoff- oder einem pulverförmigen oder granulierten Mineralstoff, insbesondere Magnesiumcarbonat, besitzen, welcher mit Unterdruck beaufschlagt ist.

14. Verfahren zum Transport und zum Einbringen einer Wohneinheit (100) in ein Lagergebäude (300) eines Gebäudesystems (1) nach einem der vorhergehenden Ansprüche,
**gekennzeichnet durch** die folgenden Verfahrensschritte:
Anordnen der Wohneinheit (100) in einer Höhe oberhalb der Transportplattform (200), absenken der Wohneinheit (100) auf die Transportplattform (200), befestigen des Bodenrahmens (112) an der Transportplattform (200), transportieren der Transportplattform (200) zu einem Lagergebäude (300) des Gebäudesystems (1), lösen des Bodenrahmens (112) von der Transportplattform (200), einführen der beiden Hubzinken (412a, 412b) eines Gabelstaplers (400) in die Huböffnungen (118) des Bodenrahmens (112), anheben der Wohneinheit (100) auf die Höhe eines nicht belegten Lagerplatzes (310.1, 310.2) im Lagergebäude (300), und positionieren der Wohneinheit (100) vor der Einschuböffnung (312) sowie einschieben der Wohneinheit (100) mittels des Gabelstaplers (400) durch die Einschuböffnung (312) hindurch in den Lagerplatz (310.1, 310.2).

## Claims

1. Building system (1) comprising a mobile transport platform (200) that is movable by a towing vehicle, and a dwelling unit (100) which has a floor (110) with an inherently rigid, rectangular, elongate floor frame (112) made of frame profiles (112a), to which thermally insulated, non-self-supporting side-wall and ceiling elements (114, 116) are fastened, which delimit the interior of the dwelling unit (100), wherein the transport platform (200) is designed to releasably receive the floor frame (112) of the dwelling unit (100) for transportation from a first location to a second location, wherein the building system (1) also comprises a storage building (300) having at least two storage locations (310.1, 310.2) which are arranged one above another, each have an insertion opening (312) and are accessible via a staircase (314) and into which the dwelling unit (100) is able to be inserted through the insertion opening (312) with a long side first, **characterized in that** the floor frame (112) has, on at least one of its long sides, two lifting openings (118) into which the lifting prongs (412a, 412b) of a forklift truck (400) are able to be introduced in order to lift the dwelling unit (100), and **in that** the side-wall and/or ceiling elements of the dwelling unit have a sandwich structure which comprises a first outer surface layer made of reinforced plastic, preferably glass-fibre-reinforced plastic, a central layer made of an insulation material, preferably a vacuum insulation material, and an internal surface layer made of wood and/or a reinforced, preferably fibre-reinforced plastic, which are connected together by adhesive, in particular polyurethane, wherein, between the outer surface layer made of reinforced plastic and the central layer made of insulation material, preferably a layer made of a fire-resistant plastics material is arranged, which contains at least 30% by weight magnesium hydroxide or aluminium hydroxide.

2. Building system according to Claim 1,
**characterized in that**
the floor frame (112) has a clear width of less than 3 m and a length of less than 11 m, preferably a clear width of 2.5 m and a length of 9 m.

3. Building system according to Claim 1 or 2,
**characterized in that**
the dwelling unit (100) has a weight of less than 3.5 t, preferably less than 2.5 t.

4. Building system according to any of the preceding claims,
**characterized in that**
receptacles (119) for releasably fastening lifting supports (119a), in particular crank supports, via which the floor frame (112) is able to be lifted in a vertical direction, are arranged on mutually opposite sides of the inherently rigid floor frame (112).

5. Building system according to any of the preceding claims,
**characterized in that**
the two lifting openings (118) have been introduced as lateral openings on the two sides of the central axis into the frame profiles (112a) of the floor frame (112) that extend in the longitudinal direction of the floor frame (112).

6. Building system according to any of the preceding claims,
**characterized in that**
it furthermore comprises at least one terrace element (120) with a walkable walking surface (122), on which element at least one lug (124) is arranged, which, in order to fasten the terrace element (120) to a long side of the dwelling unit (100), is able to be fitted into a lug receptacle (126) of the floor frame (112).

7. Building system according to Claim 6,
**characterized in that**
the lug (124) is connected foldably to the walking surface (122) via a hinge, and/or **in that** receptacles (128) for releasably fastening lifting supports (119a), via which the terrace element (120) is able to be supported on a fixed underlying surface, are arranged on the underside of the terrace element (120).

8. Building system according to any of the preceding claims,
**characterized in that**
the movable transport platform (200) is a passenger car trailer which comprises an adapter platform (210) for receiving the floor frame (112), on which platform the floor frame (112) is able to be releasably fastened for transportation.

9. Building system according to any of the preceding claims,
**characterized in that**
the storage locations (310.2), arranged above a bottommost storage location (310.1), of the storage building (300) have, on the side opposite the insertion opening (312) and the staircase (314), a safety barrier (316), in particular a railing.

10. Building system according to Claim 9,
**characterized in that**
the insertion opening (312) is arranged on the side of the storage location (310.2) opposite the safety barrier (316), and the dwelling unit (100) is able to be inserted into the storage location (310.2) through the insertion opening (312) with a side wall (113), having door and/or window openings, of a long side first in the direction of the safety barrier (316).

11. Building system according to any of the preceding claims,
**characterized in that**
a multiplicity of pegs (113) extending downwardly away from the floor frame (112) are arranged on the underside of the floor frame (112), said pegs being introducible, bringing about a form-fitting connection, into associated vertical receiving openings (213) in the transport platform (200) and associated vertical receiving openings (312) in the floor region of a storage location (310.1, 310.2) of the storage building (300) in order to secure the dwelling unit (100) to the transport platform (200) or the storage location (310.1, 310.2) in a form-fitting manner.

12. Building system according to any of the preceding claims,
**characterized in that**
at least the storage locations (310.2) of the storage building (300) that are arranged above a bottommost storage location (310.1) have a walkable terrace surface (320), as far as which a dwelling unit (100) is able to be introduced into the insertion opening (312).

13. Building system according to any of Claims 1 to 12,
**characterized in that**
the central layer comprises a multiplicity of board-like insulation elements placed against one another, which have a carrier core enclosed by an air-impermeable, in particular metallized shell made of pulverulent or granular plastic or a pulverulent or granular mineral material, in particular magnesium carbonate, which has been subjected to negative pressure.

14. Method for transporting and for introducing a dwelling unit (100) into a storage building (300) of a building system (1) according to any of the preceding claims,
**characterized by** the following method steps:
arranging the dwelling unit (100) at a height above the transport platform (200), lowering the dwelling unit (100) onto the transport platform (200), fastening the floor frame (112) to the transport platform (200), transporting the transport platform (200) to a storage building (300) of the building system (1), releasing the floor frame (112) from the transport platform (200), introducing the two lifting prongs (412a, 412b) of a forklift truck (400) into the lifting openings (118) of the floor frame (112), lifting the dwelling unit (100) to the height of an unoccupied storage location (310.1, 310.2) in the storage building (300), and positioning the dwelling unit (100) in front of the insertion opening (312) and inserting the dwelling unit (100) into the storage location (310.1, 310.2) through the insertion opening (312) by means of the forklift truck (400).

## Revendications

1. Système de bâtiment (1), comprenant une plate-forme de transport mobile (200) pouvant être déplacée par un véhicule tracteur et une unité de logement (100) qui dispose d'un plancher (110) pourvu d'un cadre de plancher (112) allongé, rectangulaire, intrinsèquement rigide et composé de profilés d'encadrement (112a), sur lequel sont fixés des éléments de paroi latérale et de plafond (114, 116) thermiquement isolés, non autoportants, qui délimitent l'espace intérieur de l'unité de logement (100), dans lequel la plate-forme de transport (200) est adaptée pour recevoir de manière amovible le cadre de plancher (112) de l'unité de logement (100) pour le transport d'un premier lieu à un deuxième lieu, dans lequel le système de bâtiment (1) comprend en outre un bâtiment de stockage (300) pourvu d'au moins deux emplacements de stockage (310.1, 310.2) disposés l'un au-dessus de l'autre, présentant respectivement une ouverture d'insertion (312) et accessibles par un escalier (314), emplacements dans lesquels l'unité de logement (100) peut être insérée par un côté longitudinal le premier à travers l'ouverture d'insertion (312),
**caractérisé en ce que** le cadre de plancher (112) présente sur au moins l'un de ses côtés longitudinaux deux ouvertures de levage (118) dans lesquelles les bras de levage (412a, 412b) d'un chariot élévateur (400) peuvent être introduits pour soulever l'unité de logement (100), et **en ce que** les éléments de paroi latérale et/ou de plafond de l'unité de logement disposent d'une structure en sandwich qui comprend une première couche de plafond extérieure en matière plastique armée, de préférence en matière plastique renforcée fibre de verre, une couche centrale en matière isolante, de préférence en matière isolante sous vide, et une couche de plafond côté intérieur en bois et/ou en matière plastique armée, de préférence renforcée fibre de verre, qui sont reliées les unes aux autres par un adhésif, en particulier par du polyuréthane, dans lequel, entre la couche de plafond extérieure en matière plastique armée et la couche centrale en matière isolante, de préférence une couche en matière plastique ignifuge est disposée, qui contient au moins 30 % en poids d'hydroxyde de magnésium ou d'hydroxyde d'aluminium.

2. Système de bâtiment selon la revendication 1, **caractérisé en ce que** le cadre de plancher (112) présente une largeur libre de moins de 3 m et une longueur de moins de 11 m, de préférence une largeur libre de 2,5 m et une longueur de 9 m.

3. Système de bâtiment selon la revendication 1 ou 2, **caractérisé en ce que** l'unité de logement (100) présente un poids de moins de 3,5 t, de préférence de moins de 2,5 t.

4. Système de bâtiment selon l'une quelconque des revendications précédentes, **caractérisé en ce que** sur des côtés mutuellement opposés du cadre de plancher (112) intrinsèquement rigide sont disposés des logements (119) pour la fixation amovible de supports de levage (119a), en particulier de supports à manivelle, par lesquels le cadre de plancher (112) peut être soulevé dans la direction verticale.

5. Système de bâtiment selon l'une quelconque des revendications précédentes, **caractérisé en ce que** les deux ouvertures de levage (118) sont introduites sous forme d'ouvertures latérales des deux côtés de l'axe médian dans les profilés d'encadrement (112a) du cadre de plancher (112) s'étendant dans la direction longitudinale du cadre de plancher (112).

6. Système de bâtiment selon l'une quelconque des revendications précédentes, **caractérisé en ce qu'**il comprend en outre au moins un élément de terrasse (120), pourvu d'une surface de marche (122) praticable, sur lequel est disposée au moins une attache (124) qui peut être accrochée pour la fixation de l'élément de terrasse (120) sur un côté longitudinal de l'unité de logement (100) dans un logement d'attache (126) du cadre de plancher (112).

7. Système de bâtiment selon la revendication 6, **caractérisé en ce que** l'attache (124) est reliée de manière rabattable par une charnière à la surface de marche (122), et/ou **en ce que** sur la face inférieure de l'élément de terrasse (120), des logements (128) pour la fixation amovible de supports de levage (119a) sont disposés par lesquels l'élément de terrasse (120) peut prendre appui sur un sol stabilisé.

8. Système de bâtiment selon l'une quelconque des revendications précédentes, **caractérisé en ce que** la plate-forme de transport (200) pouvant être déplacée est une remorque de voiture particulière qui comprend une plate-forme d'adaptation (210) pour recevoir le cadre de plancher (112) sur laquelle le cadre de plancher (112) peut être fixé de manière amovible pour le transport.

9. Système de bâtiment selon l'une quelconque des revendications précédentes, **caractérisé en ce que** les emplacements de stockage (310.2), disposés au-dessus d'un emplacement de stockage inférieur (310.1), du bâtiment de stockage (300) présentent sur le côté opposé à l'ouverture d'insertion (312) et à l'escalier (314) une barrière de sécurité (316), en particulier une balustrade.

10. Système de bâtiment selon la revendication 9, **caractérisé en ce que** l'ouverture d'insertion (312) est disposée sur le côté, opposé à la barrière de sécurité (316), de l'emplacement de stockage (310.2), et l'unité de logement (100) peut être insérée à travers l'ouverture d'insertion (312) par une paroi latérale (113) présentant des baies de porte et/ou de fenêtre d'un côté longitudinal la première en direction de la barrière de sécurité (316) dans l'emplacement de stockage (310.2).

11. Système de bâtiment selon l'une quelconque des revendications précédentes, **caractérisé en ce que** sur la face inférieure du cadre de plancher (112) est disposée une pluralité de chevilles (113) s'éloignant du cadre de plancher (112) dans la direction vers le bas, qui en générant un assemblage par complémentarité de forme peut être introduite dans des ouvertures de logement verticales associées (213) dans la plate-forme de transport (200) et des ouvertures de logement verticales associées (312) dans la zone de plancher d'un emplacement de stockage (310.1, 310.2) du bâtiment de stockage (300) pour sécuriser l'unité de logement (100) sur la plate-forme de transport (200) ou l'emplacement de stockage (310.1, 310.2) par complémentarité de forme.

12. Système de bâtiment selon l'une quelconque des revendications précédentes, **caractérisé en ce qu'**au moins les emplacements de stockage (310.2) disposés au-dessus d'un emplacement de stockage inférieur (310.1) du bâtiment de stockage (300) présentent une surface de terrasse praticable (320) jusqu'à laquelle une unité de logement (100) peut être insérée dans l'ouverture d'insertion (312).

13. Système de bâtiment selon l'une quelconque des revendications 1 à 12, **caractérisé en ce que** la position centrale comprend une pluralité d'éléments d'isolation en forme de panneaux, juxtaposés, qui disposent d'un noyau porteur entouré d'une enveloppe imperméable à l'air, en particulier métallisée, en matière plastique poudreuse ou granulée ou en substance minérale poudreuse ou granulée, en particulier en carbonate de magnésium, qui est soumis à une dépression.

14. Procédé permettant de transporter et d'introduire une unité de logement (100) dans un bâtiment de stockage (300) d'un système de bâtiment (1) selon l'une quelconque des revendications précédentes, **caractérisé par** les étapes de procédé suivantes consistant à :
disposer l'unité de logement (100) à une hauteur au-dessus de la plate-forme de transport (200), abaisser l'unité de logement (100) sur la plate-forme de transport (200), fixer le cadre de plancher (112) à la plate-forme de transport (200), transporter la plate-forme de transport (200) jusqu'à un bâtiment de stockage (300) du système de bâtiment (1), détacher le cadre de plancher (112) de la plate-forme de transport (200), introduire les deux bras de levage (412a, 412b) d'un chariot élévateur (400) dans les ouvertures de levage (118) du cadre de plancher (112), soulever l'unité de logement (100) à la hauteur d'un emplacement de stockage libre (310.1, 310.2) dans le bâtiment de stockage (300), et positionner l'unité de logement (100) devant l'ouverture d'insertion (312) et insérer l'unité de logement (100) au moyen du chariot élévateur (400) à travers l'ouverture d'insertion (312) dans l'emplacement de stockage (310.1, 310.2).
